Europäisches Patentamt

European Patent Office

Office européen des brevets

(19)

(11) **EP 0 580 489 B1**

(12) **FASCICULE DE BREVET EUROPEEN**

(45) Date de publication et mention
de la délivrance du brevet:
**04.06.1997  Bulletin 1997/23**

(51) Int Cl.⁶: **G01N 31/16**

(21) Numéro de dépôt: **93401857.3**

(22) Date de dépôt: **19.07.1993**

(54) **Procédé de dosage de l'iode à faible concentration dans une solution de nitrate, en particulier une solution de nitrate d'uranyle**

Verfahren zur Dosierung von Iod mit niedriger Konzentration in einer Nitratlösung, besonders einer Uranylnitratlösung

Method for titrating iodine at low concentration in a nitrate solution, in particular a uranyl nitrate solution

(84) Etats contractants désignés:
**FR GB**

(30) Priorité: **21.07.1992  FR 9208984**

(43) Date de publication de la demande:
**26.01.1994  Bulletin 1994/04**

(73) Titulaire: **COMMISSARIAT A L'ENERGIE ATOMIQUE
75015 Paris (FR)**

(72) Inventeurs:
• **Lecouteux, Claude**
  **F-84000 Avignon (FR)**
• **Doyen, Jean-Yves**
  **F-30360 Saint Andre de Roquepertuis (FR)**

(74) Mandataire: **Des Termes, Monique
Société Brevatome
25, rue de Ponthieu
75008 Paris (FR)**

(56) Documents cités:
**FR-A- 2 504 680          US-A- 4 172 778**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention a pour objet un procédé de dosage de l'iode à faible concentration dans une solution aqueuse contenant un nitrate oxydant.

De façon plus précise, elle concerne le dosage d'iode dans les solutions de nitrate d'uranyle provenant du retraitement de combustibles nucléaires irradiés.

Dans les installations de retraitement de combustibles nucléaires irradiés, la pratique habituelle est de dissoudre le combustible dans une solution d'acide nitrique concentrée à chaud. Lors de cette dissolution, la majeure partie de l'iode contenu dans le combustible se retrouve entraînée en phase vapeur avec la vapeur d'eau et les oxydes d'azote, mais une faible partie de l'iode se retrouve dans la solution de dissolution.

Or, à partir d'un certain seuil de concentration, la présence d'iode dans ces solutions de dissolution est gênante car elle perturbe les cycles d'extraction suivants mis en oeuvre pour séparer l'uranium, le plutonium et les produits de fission.

Il est donc important de pouvoir doser précisément la quantité d'iode présente dans ces solutions de dissolution qui peuvent contenir jusqu'à 250g/l d'uranium VI.

Le procédé de dosage utilisé doit être rapide mais surtout très sensible puisque les concentrations en iode de ces solutions sont généralement très faibles, par exemple de l'ordre de $10^{-8}$ à $10^{-9}$mol/l d'iode.

De ce fait, les procédés chimiques de dosage sont inapplicables car leur précision est insuffisante.

Aussi, on s'est orienté pour ce dosage vers les méthodes de dosage électrochimique, par exemple par potentiométrie, mais malheureusement dans l'état actuel de ces techniques, on ne peut doser l'iode que jusqu'à $10^{-7}$mol/l.

US-A-4 172 778 divulgue une électrode sélective qui est utilisée avec une électrode de référence pour déterminer la concentration d'iode dans une solution.

De plus, l'emploi de cette méthode implique que tout l'iode soit présent dans la solution sous la forme d'iodure. Or, en présence de nitrate oxydant, l'iodure se retransforme en iode et la solution évolue dans le temps.

Par ailleurs, les solutions de dissolution comportent de nombreux ions, par exemple U, Pu, Am, Cm, Rb, Sr, U, Zr, Nb, Mo, Tc, Ru, Rh, Pd, Ag, Cd, In, Sn, Sb, Fe et la présence de ces ions complique le dosage car un certain nombre d'entre eux risque d'interférer avec le dosage ou les réactifs utilisés.

La présente invention a précisément pour objet, un procédé de dosage d'iode à faible concentration, par exemple de 1 à $5.10^{-8}$mol/l, dans une solution aqueuse, qui permet d'obtenir une bonne sensibilité même en présence de nombreux ions parasites, et s'applique en particulier aux solutions de nitrate d'uranyle même chargée en sels.

Selon l'invention, le procédé de dosage d'iode à faible concentration dans une solution aqueuse contenant un nitrate oxydant, comprend les étapes successives suivantes :

1°) ajouter à un échantillon de la solution à doser un agent réducteur pour réduire tout l'iode qu 'il contient en iodure et obtenir un échantillon de volume $V_0$ ayant une concentration $c_0$ en iodure ;

2°) mesurer la différence de potentiel $E_1$ entre une électrode sélective des ions iodure et une électrode de référence immergées toutes deux dans l'échantillon de volume $V_0$ ;

3°) effectuer un premier ajout d'iodure à l'échantillon en lui ajoutant un volume $V_1$ de solution d'iodure contenant le même agent réducteur et ayant une concentration connue $c_1$ en iodure ;

4°) mesurer la différence de potentiel $E_2$ entre l'électrode sélective et l'électrode de référence après ce premier ajout d'iodure à l'échantillon ;

5°) effectuer un second ajout d'iodure à l'échantillon en lui ajoutant un volume $V_2$ de solution d'iodure contenant le même agent réducteur et ayant une concentration connue $c_2$ en iodure ;

6°) mesurer la différence de potentiel $E_3$ entre l'électrode sélective et l'électrode de référence après ce second ajout d'iodure à l'échantillon ; et

7°) déterminer à partir de $E_1$, $E_2$, $E_3$, $V_1$, $V_2$, $c_1$ et $c_2$ la concentration $c_0$ en iodure de l'échantillon réduit et la concentration en iode de la solution ;

les étapes 2°) à 6°) étant réalisées à une température de 0 à 5°C.

De préférence, l'agent réducteur utilisé est l'acide ascorbique.

Dans ce procédé, l'utilisation d'un agent réducteur tel que l'acide ascorbique, pour réduire l'iode en iodure est particulièrement intéréssante car elle permet de stabiliser l'iode dans la solution sous la forme d'iodure et d'obtenir ainsi la sensibilité de dosage voulue.

Par ailleurs, le fait d'effectuer les étapes 2) à 6) à une température de 0 à 5°C, permet d'éviter l'influence néfaste d'une dissolution d'ions I⁻ provenant de l'électrode sélective dans l'échantillon, car à ces températures cette dissolution est très réduite.

Le procédé de dosage de l'invention est basé sur l'exploitation de la relation de Nernst qui relie la différence de potentiel E établie entre une électrode sélective des ions iodure et une électrode de référence à l'activité Ax des ions iodure de la solution, soit à leur concentration.

Cette relation s'écrit :

$$E = E_0 + RT/_{nF} \log A_x$$

Ainsi, dans le dosage de l'invention, la valeur de $E_1$ dépend de la concentration initiale $c_0$ en ions iodure, et les valeurs $E_2$ et $E_3$ dépendent respectivement des concentrations $c_1$ et $c_2$ et des volumes $V_1$ et $V_2$ des ajouts d'iodure.

Aussi, en choisissant de façon appropriée les concentrations respectives $c_1$ et $c_2$ en iodure et les volumes $V_1$ et $V_2$ du premier et du second ajouts, on peut s'affranchir de l'influence néfaste des autres ions de la solution sur le dosage et déterminer avec précision la concentration initiale $c_0$ en iode de l'échantillon.

Selon l'invention, la quantité d'acide ascorbique ajoutée à l'échantillon doit être suffisante pour réduire en iodure tout l'iode qu'il contient.

Généralement, on utilise un excès par rapport à la quantité d'équivalents iode nécessaire. A titre d'exemple, on peut utiliser des solutions à 1 mol/l d'acide ascorbique et ajouter 2 volumes de cette solution à 1 volume de l'échantillon pour obtenir l'échantillon réduit de volume $V_0$ ayant une concentration en iode $c_0$ égale à 1/3 de la concentration initiale en iode de la solution à doser.

Dans le procédé de l'invention, on utilise avantageusement comme électrode sélective des ions iodure, une électrode dont la surface active est constituée par un cristal AgI/AgS. Cette électrode peut être associée à une électrode de référence constituée par une électrode au sulfate mercureux.

Avec une telle électrode sélective, on réalise de préférence les étapes 2°) à 6°) une température voisine de 0°C, car la dissolution des ions du cristal AgI de l'électrode sélective dans la solution est très réduite à 0°C, la constante de solubilité de AgI diminuant avec la température.

Ainsi avec le procédé de l'invention, on peut doser au moyen d'une électrode sélective les ions iodure, dans une solution de nitrate d'uranyle, à de très basses concentrations (ordre de $5.10^{-8}$M). Pour être capable de réaliser des mesures dans ce domaine de concentration, il est nécessaire, par rapport au dosage classique, d'abaisser sensiblement la limite de dosage des ions iodure ("classiquement" supérieure à $10^{-7M)}$.

Pour atteindre ce but deux améliorations ont été amenées au dosage :

- La cellule de mesure est maintenue aux environs de 0°C dans une plage comprise entre 0 et 5°C pendant toute la durée du dosage ;
- un calcul original itératif permet en exploitant les valeurs des tensions de l'électrode après un premier puis un second ajout dosé d'extrapoler la courbe de réponse de l'électrode dans sa partie non linéaire, et par conséquent de gagner en terme de limite de dosage.

On présente dans ce qui suit, les avantages liés à l'abaissement de température et on décrit le calcul itératif qui, en utilisant les valeurs expérimentales des tensions de l'électrode permet d'abaisser la limite de dosage.

Ainsi, d'autres caractéristiques et avantages de l'invention apparaîtront mieux à la lecture de la description qui suit donnée bien entendu à titre illustratif et non limitatif, en référence au dessin annexé sur lequel

- la figure 1 est une représentation schématique d'une cellule de dosage utilisable pour mettre en oeuvre le procédé de l'invention, et
- la figure 2 est un graphique représentant l'évolution du potentiel (en mV) mesuré dans cette cellule en fonction de la teneur en iodure de la solution (en mol/l).
- la figure 3 est un graphique illustrant l'évolution du potentiel (en mV) en fonction de la concentration en iodure (en log C) à 0°C et à 25°C.

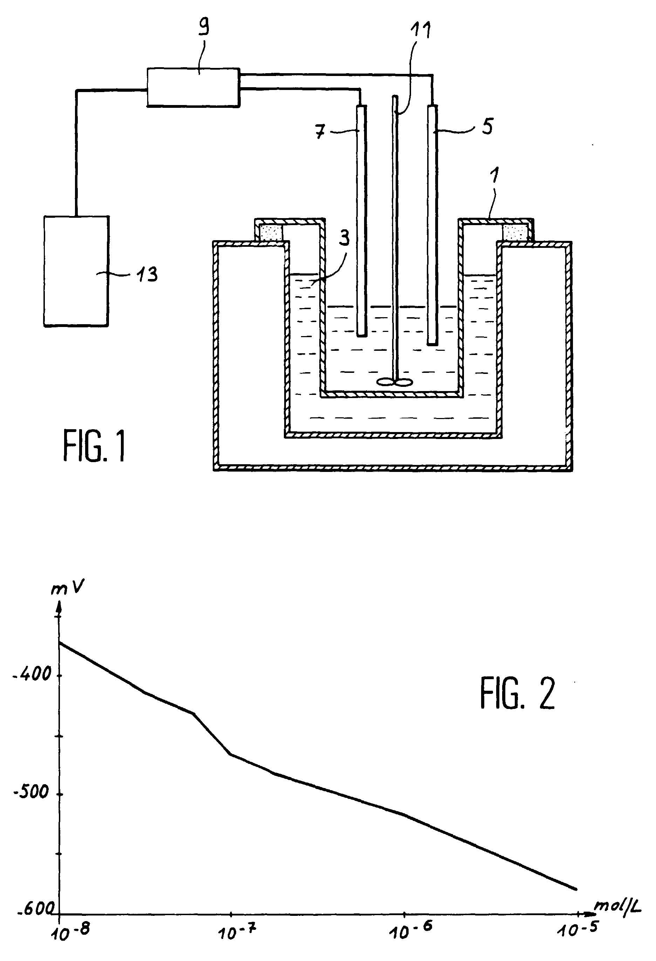

Sur la figure 1, on voit que la cellule de dosage comprend un récipient (1) destiné à recevoir l'échantillon à doser, ce récipient étant disposé dans un bain thermostaté (3) permettant de maintenir l'échantillon à la température voulue. A l'intérieur du récipient on peut disposer une première électrode (5) constituée par une électrode sélective des ions iodure et une deuxième électrode (7) constituée par une électrode de référence, ces deux électrodes étant reliées à un potentiomètre (9) permettant de mesurer la différence de potentiel entre les électrodes (5) et (7). Un agitateur (11) est également disposé dans le récipient (1).

Dans cette cellule, on peut utiliser comme électrode sélective (5), une électrode AgI/AgS telle que l'électrode ORION type 94-53, et comme électrode de référence (7), une électrode au sulfate mercureux, par exemple l'électrode TACUSSEL type S8. L'agitateur (11) est avantageusement un agitateur à palettes car les agitateurs magnétiques sont à prohiber car ils créent des parasites préjudiciables à une mesure correcte du potentiel. Le potentiomètre (9) peut être un potentiomètre METTLER type DL 40 GP.

Avantageusement, la cellule de dosage est complétée par un ensemble (13) de traitement de données relié au potentiomètre (9) pour traiter les informations données par le potentiomètre et les informations concernant les volumes $V_1$ et $V_2$ et les concentrations $c_1$ et $c_2$ en iodure des ajouts afin d'obtenir à partir de ces informations la concentration en iode de l'échantillon de solution à doser.

Cet ensemble de traitements peut être constitué par un ordinateur BULL MICRALL 30 équipé d'un interface METTLER.

En vue d'utiliser cette cellule pour le dosage de l'iode, on effectue tout d'abord un étalonnage préalable de la cellule en mesurant le potentiel entre les électrodes (5) et (7) pour diverses concentrations en iode de la solution.

Dans ce but, on introduit dans le récipient (1) maintenu à une température voisine de 0°C, 10ml d'une solution de nitrate d'uranyle et 20ml d'une solution d'acide ascorbique à 0,75mol/l.

La solution d'acide ascorbique a été obtenue par dissolution de 132g d'acide ascorbique dans de l'eau ultra pure afin d'obtenir un volume final de 1l.

La solution de nitrate d'uranyle a été obtenue en dissolvant sensiblement 290g d'oxyde d'uranium dans de l'acide nitrique 3N et en ajustant l'acidité libre par ajout de $H_2O$ ou de $HNO_3$ concentré pour obtenir une acidité de 3N dans un volume final de 1l.

On ajoute ensuite dans le récipient (1) des ions iodure avec de l'acide ascorbique pour obtenir des concentrations en iodure allant de $10^{-8}$ mol/l à $10^{-5}$mol/l, les volumes de solution d'iodure ajoutés étant suffisamment petits pour ne pas modifier de façon significative la composition de la solution à analyser.

Les solutions d'iodure utilisées pour obtenir ces concentrations sont préparées en diluant dans la solution d'acide ascorbique à 0,75mol/l une solution-mère à $10^{-1}$mol/l d'iodure de potassium obtenue en dissolvant 16,6g de KI dans de l'eau ultra-pure pour obtenir un volume final de 100ml dans un volume final de 50ml.

A titre d'exemple, on ajoute à chaque fois 50µl de solution d'iodure contenant de l'acide ascorbique et on détermine après chaque addition la différence de potentiel entre l'électrode sélective (5) et l'électrode de référence (7).

Les résultats obtenus sont donnés sur la figure 2 qui représente l'évolution du potentiel (en mV) en fonction du logarithme décimal de la concentration en iode de l'échantillon (en mol/l).

Sur cette figure, on voit que la réponse est linéaire dans l'intervalle de concentrations allant de $10^{-5}$ à $10^{-7}$ M, mais qu'à partir de $10^{-7}$M, la courbe ne suit plus la loi de Nernst.

A partir de $10^{-9}$M le palier dû à la solubilité du cristal de l'électrode est atteint.

La courbe d'étalonnage représentée sur la figure 2 est seulement utile pour évaluer les quantités d'ions iodure qui devront être présentes dans les deux ajouts effectués au cours d'un dosage conforme à l'invention, comme on le verra dans l'exemple de dosage donné ci-après.

Dans cet exemple, on décrit un dosage réalisé conformément à l'invention dans la cellule représentée sur la figure 1.

Pour ce dosage, on introduit tout d'abord dans le récipient (1), 10ml de l'échantillon de solution à analyser et 20ml d'une solution aqueuse d'acide ascorbique à 0,75mol/l. On fait fonctionner le bain thermostaté (3) pour obtenir une température constante voisine de 0°C, puis on plonge l'ensemble constitué par les électrodes (5) et (7) et l'agitateur (11) dans la solution.

Ces électrodes ont été maintenues à 0°C pendant une demi-journée avant de commencer le premier dosage.

Dans ces conditions, le potentiomètre (9) indique la différence de potentiel entre les électrodes (5) et (7).

Lorsque le critère de stabilité est observé, soit après un temps de stabilisation tel que la variation de potentiel soit inférieure à 0,07mV/min, la valeur du potentiel $E_1$ (exprimé en mV) est transférée à l'ensemble (13) de traitement de données.

On effectue alors le premier ajout d'iodure en ajoutant dans le récipient (1) un volume $V_1$ de solution d'iodure contenant de l'acide ascorbique ayant une concentration $c_1$ en iodure. Le volume $V_1$ de cet ajout et sa concentration $c_1$ sont choisis au vu de la courbe d'étalonnage de la figure 2 pour que l'on obtienne après cet ajout un potentiel $E_2$ tel que $7 < E_2 - E_1 < 15$mV. Par ailleurs, le volume $V_1$ doit être faible, de préférence au plus égal à $10^{-3}V_0$, par exemple compris entre 10 et 50µl.

Dans ce but, on ajoute 20µl d'une solution d'iodure de potassium à 0,1mol/l d'iodure qui a été obtenue à partir de la solution-mère d'iodure par dilution dans la solution d'acide ascorbique 0,75M.

Après ce premier ajout, on détermine le potentiel $E_2$ et on l'introduit également dans le système (13) de traitement de données lorsque le critère de stabilité est observé.

On effectue ensuite le second ajout de solution d'iodure contenant de l'acide ascorbique qui a par exemple une concentration $c_2$ en iodure et un volume $V_2$ tel que $c_2V_2$ soit égal à 5 fois $c_1V_1$. Comme pour le premier ajout, $V_2$ doit être faible et ne pas dépasser $10^{-3}V_0$.

A titre d'exemple, on ajoute 10µl d'une solution d'iodure de potassium à 1mol/l contenant également de l'acide ascorbique, obtenue comme dans le cas du premier ajout.

Après détermination du potentiel $E_3$ de la solution après le second ajout, on transmet cette donnée à l'ensemble de traitement (13) qui calcule par itération la concentration initiale $c_0$ de l'échantillon de volume $V_0$ à partir des équations

suivantes :

$$p = (E_3 - E_1) / \log \left| 1 + (k+1)\, c/c_0 \right| \qquad (1)$$

$$c_0 = c / \left|_{10}(E_2-E_1)/p_{-1}\right| \qquad (2)$$

dans lesquelles k est égal à $C_2 V_2 / C_1 V_1$ et c est égal à $c_1 V_1/V_0$,
puis la concentration de la solution à doser, qui est égale à $3xc_0$ puisque l'échantillon a été dilué par 3 dans l'acide ascorbique.

Pour effectuer le calcul itératif, on donne à p une valeur arbitraire (voisine de la valeur expérimentale théorique), dans l'équation (2). On en déduit une valeur de $c_0$ qui est réinjectée dans l'équation (1) permettant de déduire une nouvelle valeur de p, à son tour réinjectée dans l'équation (2) etc.

Le système converge et permet d'aboutir à une valeur finale de $c_0$.

On a effectué de cette façon, plusieurs dosages successifs sur la même solution de nitrate d'uranyle. Les résultats obtenus sont reportés dans le tableau 1 suivant.

TABLEAU 1

| N° de dosage | Concentration en iode |
|---|---|
| 1 | $1{,}51.10^{-7}$ mol/l |
| 2 | $1{,}55.10^{-7}$ mol/l |
| 3 | $1{,}46.10^{-7}$ mol/l |
| 4 | $1{,}47.10^{-7}$ mol/l |
| 5 | $1{,}61.10^{-7}$ mol/l |
| 6 | $1{,}55.10^{-7}$ mol/l |
| 7 | $1{,}87.10^{-7}$ mol/l |

Ainsi, la valeur moyenne est de $1{,}57.10^{-7}$ mol/l et l'écart-type de $1{,}40.10^{-8}$ mol/l.

L'intervalle de confiance calculé pour une probabilité de 95% est de $0{,}13.10^{-7}$ mol/l. La répétabilité est de 8,3% au niveau de probabilité de 95%.

Selon un mode préféré de réalisation du dosage de l'invention, on effectue le calcul itératif de la concentration en ions iodure à partir de l'équation (3) suivante :

$$c_0 = c_1 \left[ (k+1) / 2(\coth\alpha2-1) - (\coth\alpha1-1).\ \Gamma/2 \right]/(1-\Gamma) \qquad (3)$$

en posant

$$\alpha1 = (E2-E1)\ \ln(10) / 2p$$

$$\alpha2 = (E3-E1)\ \ln(10) / 2p$$

$$p = \frac{RT}{nF}$$

$$\Gamma = (e^{\alpha1 - \alpha2}) - \mathrm{ch}\alpha^2 / \mathrm{ch}\alpha^1$$

$$k = c_2 V_2 / c_1 V_1$$

Dans ce calcul, on suppose, ce qui correspond bien à la réalité expérimentale, que :

- la solubilité du cristal de l'électrode dans la solution est le facteur limitant de l'utilisation de l'électrode aux basses concentrations ;
- l'espèce cationique associée aux iodures, dans le cristal de l'électrode, est absente des solutions analysées,
- que l'ajout dosé ne modifie significativement, ni le volume, ni la force ionique de la solution initiale (dans cette dernière hypothèse, le coefficient d'activité des ions iodure reste constant. On peut alors remplacer dans le cas particulier des calculs l'activité des ions par leur concentration).

Cette équation est une expression explicite de la concentration recherchée ($c_0$), en fonction des ajouts et des potentiels correspondants.

Pour les très faibles concentrations, là où l'ajout d'une quantité d'ions iodures équivalente à la quantité initiale amenée par l'échantillon conduit à des sauts de potentiel inférieurs à 5mV, la technique classique aboutit à des erreurs de l'ordre de 500%. La technique décrite ci-dessus donne un résultat dont l'exactitude peut être de quelques % si les potentiels lus sont suffisamment précis.

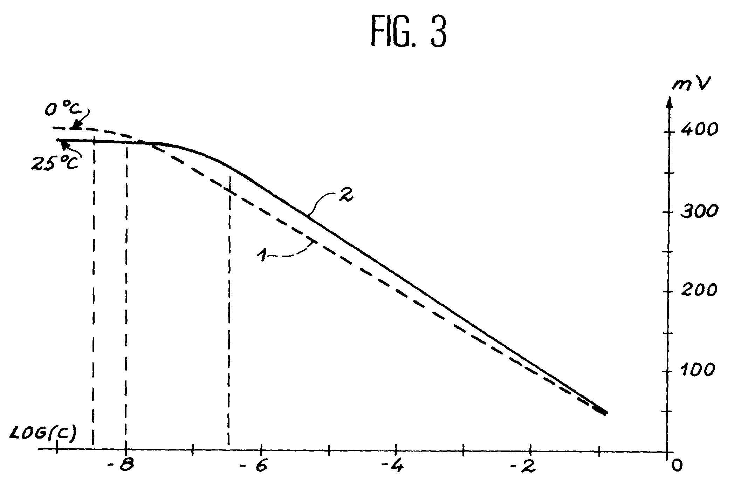

Sur la figure 3, on a représenté les courbes de réponse de l'électrode utilisée en fonction de la concentration en iode de l'échantillon, exprimée sous forme logarithmique en mol/l, à 0°C (courbe 1) et 25°C (courbe 2).

La comparaison des deux courbes montre le gain, en terme de limite de dosage, réalisé grâce au choix d'une température de 0°C.

Si l'on se réfère à la partie linéaire de la réponse de l'électrode, on constate que le fait de travailler à 0°C permet de mesurer des concentrations de l'ordre de $10^{-8}$M, tandis qu'à 25°C la concentration mesurée dans les conditions similaires conduit à $3.10^{-7}$M.

Le fait de travailler à 0°C permet d'obtenir un gain d'un facteur d'environ 50.

Par ailleurs, le fait de pouvoir déterminer par le calcul itératif, la "pente" de l'électrode, permet d'utiliser la partie non linéaire de la courbe de l'électrode sélective : millivolts = f(concentration) et donc de gagner en limite de sensibilité.

Dans l'exemple donné, on peut estimer des concentrations jusqu'à environ $3.10^{-9}$M, ce qui aboutit finalement à un gain de sensibilité de 100 par rapport au procédé classique.

Ainsi, grâce au choix de la température et du mode de calcul itératif, le procédé de dosage de l'invention conduit à une bonne sensibilité et à une bonne reproductibilité des résultats, en abaissant de plus la limite de dosage.

Par ailleurs, des mesures d'une concentration en iodure d'environ $1,5.10^{-7}$mol/l sur des solutions contenant 250g/l d'uranium et ayant une acidité nitrique de 3N, n'ont pas été perturbées par la présence des ions suivants :

$Al^{3+}$: 100mg/l
$Co^{2+}$: 200mg/l
$Mg^{2+}$ : 30mg/l
$Mn^{2+}$ : 30mg/l
$Sr^{2+}$: 30mg/l
$Zn^{2+}$: 30mg/l

Pour ces dosages, les durées moyennes sont de 20 min pour des solutions à $10^{-5}$mol/l d'iode et de 60 min pour les faibles concentrations en iode ($5.10^{-8}$M).

D'autres mesures effectuées sur des solutions d'iodure ayant une concentration en iodure de $10^{-6}$mol/l et une acidité nitrique 3 N ont conduit aux résultats donnés dans le tableau 2 pour les deux modes de calcul. Pour ces dosages, on a utilisé pour le premier ajout une concentration $c_1$ et un volume $V_1$ tels que l'on double approximativement la concentration dans la cellule, et pour le second ajout un volume $V_2$ et une concentration $c_2$ tels que $V_2 c_2 = 5 V_1 c_1$.

Dans le cas du deuxième mode de calcul (équation 3 ), la valeur de p était de 56mV. Ce deuxième mode de calcul concerne plus précisément le domaine des faibles concentrations où la représentation graphique n'est plus linéaire et pour lequel on ne dispose pas de valeurs expérimentales.

Les résultats obtenus sur 11 dosages sont donnés dans le tableau 2.

Les résultats du tableau 2 confirment la justesse du procédé de dosage.

**TABLEAU 2**

| E1(mV) | E2(mV) | E3(mV) | E1-E2 | E1-E3 | calcul 1 C0(mol/L) | calcul 2 C0 (mol/L.$10^{-6}$) |
|---|---|---|---|---|---|---|
| -528,1 | -543,8 | -572,6 | 15,7 | 44,7 | $1,029.10^{-6}$ | 0,983 |
| -527,0 | -542,8 | -571,5 | 15,8 | 44,5 | $9,98.10^{-7}$ | 0,996 |
| -529,2 | -545,5 | -574,0 | 16,3 | 44,8 | $9,09.10^{-7}$ | 1,19 |
| -528,8 | -544,0 | -572,4 | 15,2 | 43,6 | $1,073.10^{-6}$ | 0,996 |
| -530,8 | -546,0 | -574,5 | 15,2 | 43,7 | $1,082.10^{-6}$ | 0,992 |
| -529,5 | -545,0 | -573,2 | 15,5 | 43,7 | $1,011.10^{-6}$ | 1,17 |
| -532,0 | -547,2 | -575,4 | 15,2 | 43,4 | $1,048.10^{-6}$ | 1,11 |
| -531,8 | -547,2 | -575,6 | 15,4 | 43,8 | $1,042.10^{-6}$ | 1,07 |
| -531,8 | -547,3 | -575,8 | 15,5 | 44,0 | $1,035.10^{-6}$ | 1,05 |
| -531,9 | -547,2 | -575,9 | 15,3 | 44,0 | $1,074.10^{-6}$ | 0,936 |
| **Moyennes** -529,8 | -545,4 | -574,0 | 15,6 | 44,2 | $1,022.10^{-6}$ | 1,049 |
| **Ec. type** 2,02 | 1,71 | 1,53 | 0,51 | 0,85 | $5,543.10^{-8}$ | $8,0.10^{-2}$ |
| **C. de var.** 0,38 | 0,31 | 0,27 | 3,26 | 1,93 | 5,42 | |

Interv. de confiance pour un résultat individuel (en %) | 12,1

## Revendications

1. Procédé de dosage d'iode à faible concentration dans une solution aqueuse contenant un nitrate oxydant, comprenant les étapes successives suivantes :

   1°) ajouter à un échantillon de la solution à doser un agent réducteur pour réduire tout l'iode qu'il contient en iodure et obtenir un échantillon de volume $V_0$ ayant une concentration $c_0$ en iodure ;

   2°) mesurer la différence de potentiel $E_1$ entre une électrode sélective (5) des ions iodure et une électrode de référence (7) immergées toutes deux dans l'échantillon de volume $V_0$ ;

   3°) effectuer un premier ajout d'iodure à l'échantillon en lui ajoutant un volume $V_1$ de solution d'iodure contenant le même agent réducteur et ayant une concentration connue $c_1$ en iodure ;

   4°) mesurer la différence de potentiel $E_2$ entre l'électrode sélective (5) et l'électrode de référence (7) après ce premier ajout d'iodure à l'échantillon ;

5°) effectuer un second ajout d'iodure à l'échantillon en lui ajoutant un volume $V_2$ de solution d'iodure contenant le même agent réducteur et ayant une concentration connue $c_2$ en iodure ;

6°) mesurer la différence de potentiel $E_3$ entre l'électrode sélective (5) et l'électrode de référence (7) après ce second ajout d'iodure à l'échantillon ; et

7°) déterminer à partir de $E_1$, $E_2$, $E_3$, $V_1$, $V_2$, $c_1$ et $c_2$ la concentration $c_0$ en iodure de l'échantillon réduit et la concentration en iode de la solution :

les étapes 2°) à 6°) étant réalisées à une température de 0 à 5°C.

2. Procédé selon la revendication 1, caractérisé en ce que l'agent réducteur est l'acide ascorbique.

3. Procédé selon la revendication 1, caractérisé en ce que l'électrode sélective (5) des ions iodure est une électrode AgI/AgS.

4. Procédé selon la revendication 1, caractérisé en ce que l'électrode de référence (7) est une électrode au sulfate mercureux.

5. Procédé selon l'une quelconque des revendications 3 et 4, caractérisé en ce que l'on effectue les étapes 2°) à 6°) à une température voisine de 0°C.

6. Procédé selon la revendication 1, caractérisé en ce que les volumes $V_1$ et $V_2$ du premier et du second ajouts sont au plus égaux à $10^{-3}\, V_0$.

7. Procédé selon la revendication 1, caractérisé en ce que $V_1$ et $c_1$ sont tels que $E_2$-$E_1$ soit de 7 à 15mV.

8. Procédé selon la revendication 1, caractérisé en ce que $V_2$ et $c_2$ sont tels que

$$V_2\, c_2 = kV_1\, c_1.$$

9. Procédé selon la revendication 8, caractérisé en ce que k est égal à 5.

10. Procédé selon l'une quelconque des revendications 1, 8 et 9 caractérisé en ce que l'on calcule la concentration $c_0$ de l'échantillon de volume $V_0$ par itération à partir des 2 équations suivantes :

$$p = (E_3 - E_1) / \log \left| 1 + (k+1)\, c/c_0 \right|$$

$$c_0 = c / \left|_{10}(E_2-E_1)/p_{-1}\right|$$

dans lesquelles k est égal à $C_2V_2/C_1V_1$ et c est égal à $c_1V_1/V_0$.

11. Procédé selon l'une quelconque des revendications 1, 8 et 9, caractérisé en ce que l'on calcule la $c_0$ de l'échantillon de volume $V_0$ par itération à partir des équations suivantes :

$$c_0 = c_1\, [(k+1) / 2(\coth\alpha\, 2\text{-}1) - (\coth\alpha\, 1\text{-}1).\ \Gamma/2]/(1\text{-}\Gamma)$$

avec

$$k = c_2V_2 / c_1\, V_1$$

$$\alpha 1 = (E2\text{-}E1)\ \ln (10) / 2p$$

$$\alpha 2 = (E3 - E1) \ln (10) / 2p$$

$$p = \frac{RT}{nF}$$

$$\Gamma = (e^{\alpha 1 - \alpha 2}) - \operatorname{ch} \alpha 2 / \operatorname{ch} \alpha 1.$$

12. Procédé selon l'une quelconque des revendications 1 à 11, caractérisé en ce que la solution aqueuse à doser est une solution de nitrate d'uranyle.

13. Procédé selon la revendication 12, caractérisé en ce que la solution aqueuse de nitrate d'uranyle est chargée en sels.

## Claims

1. Process for the determination of iodine in low concentration in an aqueous solution containing an oxidizing nitrate, comprising the following successive stages:

    1°) adding to a sample of the solution to be determined a reducing agent in order to reduce all the iodine contained therein into iodide and obtain a sample of volume $V_0$ having an iodide concentration $C_0$,
    2°) measuring the potential difference $E_1$ between a selective iodide ion electrode (5) and a reference electrode (7), both immersed in the sample of volume $V_o$,
    3°) carrying out a first addition of iodide to the sample by adding to it an iodide solution volume $V_1$ containing the same reducing agent and having a known iodide concentration $c_1$,
    4°) measuring the potential difference $E_2$ between the selective electrode (5) and the reference electrode (7) after the first iodide addition to the sample,
    5°) carrying out a second iodide addition to the sample by adding to it an iodide solution volume $V_2$ containing the same reducing agent and having a known iodide concentration $C_2$,
    6°) measuring the potential difference $E_3$ between the selective electrode (5) and the reference electrode (7) following said second iodide addition to the sample and
    7°) determining from $E_1$, $E_2$, $E_3$, $V_1$, $V_2$, $c_1$ and $c_2$ the iodide concentration c of the reduced sample and the iodine concentration of the solution, stages 2 to 6 being performed at a temperature of 0 to 50°C.

2. Process according to claim 1, characterized in that the reducing agent is ascorbic acid.

3. Process according to claim 1, characterized in that the selective iodide (5) ion electrode is an AgI/AgS electrode.

4. Process according to claim 1, characterized in that the reference electrode (7) is a mercurous sulphate electrode.

5. Process according to either of the claims 3 and 4, characterized in that the stages 2°) and 6°) are performed at a temperature close to 0°C.

6. Process according to claim 1, characterized in that the volumes $V_1$ and $V_2$ of the first and second additions are at the most equal to $10^{-3} V_0$.

7. Process according to claim 1, characterized in that $V_1$ and $c_1$ are such that $E_2 - E_1$ is 7 to 15 mV.

8. Process according to claim 1, characterized in that $V_2$ and $c_2$ are such that

$$V_2 c_2 = k V_1 c_1$$

9. Process according to claim 8, characterized in that k is equal to 5.

10. Process according to any one of the claims 1, 8 and 9, characterized in that the calculation of the concentration

$c_0$ of the sample of volume $V_o$ takes place by iteration from the two following equations:

$$p = (E_3-E_1)/\log\left|1+(k+1)c/c_0\right|$$

$$C_0 = c/\left|10(E_2-E_1)/p-1\right|$$

in which k is equal to $C_2V_2/C_1V_1$ and c is equal to $c_1V_1/V_0$.

**11.** Process according to any one of the claims 1, 8 and 9, characterized in that the $c_0$ of the sample of volume $V_0$ is calculated by iteration from the following equations:

$$c_0 = c_1\ [(k+1)/2(\coth\alpha2-1)-(\coth\alpha1-1).\Gamma/2]/(1-\Gamma)$$

with $k = c_2V_2/c_1V_1$

$$\alpha1 = (E2-E1)\ln(10)/2p$$

$$\alpha2 = (E3-E1)\ln(10)/2p$$

$$p = \frac{RT}{nF}$$

$$\Gamma = (e^{\alpha1-\alpha2})-ch\alpha2/ch\alpha1.$$

**12.** Process according to any one of the claims 1 to 11, characterized in that the aqueous solution to be determined is a uranyl nitrate solution.

**13.** Process according to claim 12, characterized in that the aqueous uranyl nitrate solution contains salts.

**Patentansprüche**

**1.** Verfahren zur Bestimmung von Iod niedriger Konzentration in einer wäßrigen Lösung, welche oxidierendes Nitrat enthält, nacheinander die folgenden Schritte umfassend:

1°) Zugabe eines Reduktionsmittels zu einer Probe der zu bestimmenden Lösung, um alles Iod, welches sie enthält, zu Iodid zu reduzieren und um eine Probe des Volumens $V_0$ zu erhalten, die eine Iodidkonzentration $c_0$ hat,

2°) Messen der Potentialdifferenz $E_1$ zwischen einer für die Iodidionen selektiven Elektrode (5) und einer Bezugselektrode (7), die beide in die Probe des Volumens $V_0$ eingetaucht sind,

3°) Vornahme einer ersten Zugabe von Iodid zu der Probe, wobei man dieser ein Volumen $V_1$ einer Iodidlösung hinzufügt, welche dasselbe Reduktionsmittel enthält und eine bekannte Iodidkonzentration $c_1$ hat,

4°) Messen der Potentialdifferenz $E_2$ zwischen der selektiven Elektrode (5) und der Bezugselektrode (7) nach dieser ersten Zugabe von Iodid zu der Probe,

5°) Vornahme einer zweiten Zugabe von Iodid zu der Probe, wobei man dieser ein Volumen $V_2$ einer Iodidlösung hinzufügt, welche dasselbe Reduktionsmittel enthält und eine bekannte Iodidkonzentration $c_2$ hat,

6°) Messen der Potentialdifferenz $E_3$ zwischen der selektiven Elektrode (5) und der Bezugselektrode (7) nach dieser zweiten Zugabe von Iodid zu der Probe und

7°) Ermitteln der Iodidkonzentration $c_0$ der reduzierten Probe und der Iodkonzentration der Lösung, ausgehend von $E_1$, $E_2$, $E_3$, $V_1$, $V_2$, $c_1$ und $c_2$,

wobei die Schritte 2°) bis 6°) bei einer Temperatur von 0 bis 5°C ausgeführt werden.

**2.** Verfahren nach Anspruch 1, dadurch gekennzeichnet, daß das Reduktionsmittel Ascorbinsäure ist.

**3.** Verfahren nach Anspruch 1, dadurch gekennzeichnet, daß die für die Iodidionen selektive Elektrode (5) eine AgI/AgS-Elektrode ist.

**4.** Verfahren nach Anspruch 1, dadurch gekennzeichnet, daß die Bezugselektrode (7) eine Quecksilber(I)-sulfat-Elektrode ist.

**5.** Verfahren nach einem der Ansprüche 3 und 4, dadurch gekennzeichnet, daß man die Schritte 2°) bis 6°) bei einer Temperatur nahe bei 0°C ausführt.

**6.** Verfahren nach Anspruch 1, dadurch gekennzeichnet, daß die Volumina $V_1$ und $V_2$ der ersten und der zweiten Zugabe höchstens gleich $10^{-3} V_0$ sind.

**7.** Verfahren nach Anspruch 1, dadurch gekennzeichnet, daß $V_1$ und $c_1$ derart sind, daß $E_2-E_1$ 7 bis 15 mV beträgt.

**8.** Verfahren nach Anspruch 1, dadurch gekennzeichnet, daß $V_2$ und $c_2$ derart sind, daß

$$V_2 c_2 = k V_1 c_1.$$

**9.** Verfahren nach Anspruch 8, dadurch gekennzeichnet, daß k gleich 5 ist.

**10.** Verfahren nach einem der Ansprüche 1, 8 und 9, dadurch gekennzeichnet, daß man die Konzentration $c_0$ der Probe des Volumens $V_0$ durch Iteration berechnet, ausgehend von den folgenden zwei Gleichungen:

$$p = (E_3 - E_1) / \log \left| 1 + (k+1) c/c_0 \right|$$

$$C_0 = c / \left| {}_{10} (E_2-E_1)/p {}_{-1} \right|$$

worin k gleich $c_2 V_2 / c_1 V_1$ ist und c gleich $c_1 V_1 / V_0$ ist.

**11.** Verfahren nach einem der Ansprüche 1, 8 und 9, dadurch gekennzeichnet, daß man die Konzentration $c_0$ der Probe des Volumens $V_0$ durch Iteration berechnet, ausgehend von den folgenden Gleichungen:

$$c_0 = c_1[(k+1)/2(\coth \alpha 2 - 1) - (\coth \alpha 1 - 1) \cdot \Gamma/2]/(1-\Gamma)$$

mit

$$k = c_2 V_2 / c_1 V_1$$

$$\alpha 1 = (E2-E1) \ln(10) / 2p$$

$$\alpha 2 = (E3-E1) \ln(10) / 2p$$

$$p = RT/nF$$

$$\Gamma = (e^{\alpha 1-\alpha 2}) - \operatorname{ch} \alpha 2 / \operatorname{ch} \alpha 1$$

**12.** Verfahren nach einem der Ansprüche 1 bis 11, dadurch gekennzeichnet, daß die zu bestimmende wäßrige Lösung eine Uranylnitratlösung ist.

13. Verfahren nach Anspruch 12, dadurch gekennzeichnet, daß die wäßrige Uranylnitratlösung mit Salzen beladen ist.

FIG. 1

FIG. 2

# FIG. 3

EP 0 580 489 B1